# EUROPEAN PATENT SPECIFICATION

(11) **EP 0 348 462 B1**
(45) Date of publication and mention of the grant of the patent: **18.05.1994**
(21) Application number: 88910371.9
(22) Date of filing: 01.11.1988
(51) Int. Cl.: C08F 8/00, C08F 8/12, C08F 8/30, C08F 8/32, C08F 8/34, C08F 8/42

(54) **SURFACE MODIFIED OPTICAL LENS AND METHOD OF SURFACE MODIFICATION**
OBERFLÄCHLICH MODIFIZIERTE LINSE UND VERFAHREN
LENTILLE OPTIQUE A SURFACE MODIFIEE ET PROCEDE DE MODIFICATION DE LA SURFACE

(30) Priority: 06.11.1987 US 118198
(43) Date of publication of application: 03.01.1990
(73) Proprietor: IOPTEX RESEARCH INC., Azusa California 91702 (US)
(72) Inventor: GUPTA, Amitava, Pasadena, CA 91106 (US)
(74) Representative: Gilholm, Stephen Philip
(86) International application number: US8803878
(87) International publication number: WO8904330

(56) References cited:
- EP-A- 0 068 800
- EP-A- 0 192 831
- US-A- 3 029 228
- US-A- 3 927 206
- US-A- 3 949 021
- US-A- 3 957 740
- US-A- 4 260 715
- US-A- 4 312 725
- US-A- 4 332 922
- US-A- 4 419 505
- US-A- 4 487 905
- US-A- 4 500 695
- US-A- 4 550 139
- US-A- 4 616 045
- US-A- 4 687 816
- US-A- 4 734 475
- US-A- 4 761 436

## Description

### BACKGROUND OF THE INVENTION

The present invention relates to improvements in artificial optical lenses such as contact lenses, intraocular lenses and intracorneal implants, and, more particularly to such optical lenses having an outermost surface modified in molecular structure to provide medically desirable lens surface properties such as improved biological inertness, soil resistance, glare reduction, ultraviolet light absorption and selective cytotoxic and bactericidal properties.

There is a recognized need in the field of artificial optical lenses for lenses having surfaces which are characterized by properties of biological inertness. In addition, it is desired that such surfaces be soil resistant, glare free, capable of absorbing ultra violet light and possess cytotoxic and bactericidal properties.

Accordingly, in my recently issued United States Patent 4,655,770, the stated primary objective is to provide an improved biological implant material particularly for use as an intraocular lens wherein the material is designed to substantially minimize or eliminate inflammatory reactions with surrounding tissue or cells.

More particularly, in my prior patent, I detail a method of passivating or modifying the surface of a transparent polymeric material forming an intraocular lens by chemically bonding a layer of a relatively inert fluorocarbon to the outer surface of the polymeric material. Preferably, the polymeric material is polymethyl methacrylate (PMMA). In the bonding process, the PMMA is first treated with an oxidizing agent to produce a high concentration of hydroxyl groups at the surface of the PMMA. The hydroxyl groups bond the fluorocarbon to the PMMA creating the desired inert surface minimizing or eliminating inflammatory reactions with surrounding tissue or cells.

United States Patent No US-A-4761436 discloses a contact lens substrate comprising a triorganovinylsilane based polymer.

United States Patent No US-A-4734475 discloses a contact lens fabricated from a hydrophobic addition polymer incorporating oxirane substituted units in the backbone thereof. The outer surface of the lens contain oxirane units substituted with a water soluble amine, alcohol, thiol, urea, or thiourea, or a sulfite, bisulfite or thiosulfate, in an amount sufficient to increase the contact angle by at least 5%.

United States Patent No US-A-4687816 discloses a process for the treatment of a lens effected by esterification of the hydroxyl groups of an acrylic ester lens using an organic acid anhydride.

United States Patent No US-A-4616045 discloses a process of preparing a contact lens material and lenses made using this material. The lens material is made by copolymerising a mixture comprising a styrene component, a vinyl alcohol ester component, a polyethyleneglycol mono ester component, and a substituted polysiloxane or a substituted silane component.

United States Patent No US-A-4550139 discloses a lens prepared from an alloy of a polyacrylate resin and a siloxane styrene copolymer.

United States Patent No US-A-4419505 discloses a copolymer composition for use in fabricating contact lenses. The composition comprises a hydroxy ester silane, an alkyl-alkoxy silane and an alkanol ester of acrylic methacrylic acid.

United States Patent No US-A-4332922 discloses a process for rendering silicone rubber contact lenses hydrophilic by first reacting the silicone rubber with an oligomeric siloxane containing SiH groups and then subjecting the resulting equilibrated silicone rubber to either a reaction with an aqueous base, or a silane addition reaction with compounds containing C-C double bonds. Among the compounds suitable for the silane addition reaction are methacrylic acid glycidyl ester, acrylic acid alkyl ester and methacrylic acid alkyl ester. Use of these compounds requires a third step, an esterification conversion to render the contact lenses hydrophilic.

United States Patent No US-A-4312725 discloses contact lenses formed by the polymerisation of monomers comprising at least one alkyl styrene monomer having at least one C₁ or higher alkyl group on the aromatic ring and having its surface modified by chemical treatment of ultraviolet light to lower the contact wetting angle thereof.

United States Patent No US-A-4260725 discloses a contact lens comprising a polysiloxane which is α, ω terminally bonded through divalent hydrocarbon groups to polymerisably activated unsaturated groups and which contain hydrophilic side chains.

United States Patent Nos US-A-3957740 and US-A-3927206 disclose copolymers comprising acrylic or methacrylic acid and methacrylate or methyl acrylate which are neutralised by the addition of cyclic imines. The copolymers disclosed are useful in the formation of contact lenses.

United States Patent No US-A-3949021 discloses a contact lens made from a polymer of cross-link-polymerised N-vinyl pyrrolidone in the presence of a water-insoluble linear polymer dissolved in vinyl monomer.

United States Patent No US-A-3029228 discloses a process for hydrolysing particulate methyl methacrylate and other methacrylates by means of alkalies such as sodium, potassium or lithium hydroxides. The hydrolysis is carried out in a medium containing an organic solvent selected from the group consisting of isopropanol and mixtures of isopropanol and ethyleneglycol.

United States Patent No US-A-4500695 discloses a composition suitable for the manufacture of contact lenses consisting essentially of a copolymer of, vinyl siloxane and vinyl acetate.

United States Patent No US-A-4487905 discloses a cured polysiloxane composition consisting essentially of an acrylate-functional polysiloxane composition containing acrylate-functional siloxane units, an organosilicon cross-linking agent and a catalyst.

European Patent Application No EP 0 192 831 discloses a method for modifying a surface of a soft contact lens using diazoalkane, dimethylformamide dialkyl acetal or the reaction product of alkylene diisocyanate and polyethylene glycol monomethyl ether. European Patent Application No EP 0 068 800 discloses a process for improving the surface of an acrylate or methacrylate polymer by treating with hot water, hot aqueous aklali solution or hot aqueous acid solution, but does not disclose further coating of a surface.

Recently, I have discovered a surface activating hydrolysis reaction which when applied to an acrylic polymer forms high concentrations of active carboxyl groups formed by the hydrolysis reaction to be reactive with perfluoro groups as well as various other chemical groups which are not reactive with hydroxyl groups but which possess particularly desirable chemical characteristics in association with optical lenses. In particular, when applied to optical lens bodies of acrylic polymers, my surface modification process produces a lens body modified in molecular structure to possess desired characteristics of improved biological inertness, soil resistance, and glare reduction, or ultra violet light absorption or cytotoxic or anti-bacterial properties.

### SUMMARY OF INVENTION

Generally speaking, in my present invention, a lens body of an acrylic polymer is characterized by an outermost surface modified in molecular structure to possess a desired characteristic, such as biological inertness, low glare, soil resistance, UV absorbance, and cytotoxic and anti-bacterial properties. The modified surface includes a select chemical group, having the desired characteristic, bound by silane groups to reactive carboxyl groups on polymer chains of the acrylic polymer at the outermost surface of the lens body. Such modification is accomplished by reacting a reagent including the select chemical group with reactive carboxyl groups on polymer chains at the outermost surface of the acrylic polymer to bond the select chemical group to and modify the molecular structure of the surface of the lens. Usually, the reactive carboxyl groups are formed by an activation step wherein a surface activating hydrolysis reaction occurs at the outermost surface of the acrylic polymer lens body to generate a high concentration of active carboxyl groups on polymer chains at the outermost surface of the lens body. The activation step is followed by a surface modifying step wherein the activated outermost surface of the lens body is reacted with a reagent including the select chemical group having the desired lens surface characteristic. In practice, some acrylic polymers naturally possess a high concentration of carboxyl groups at their outermost surface. For such acrylic polymers, my surface modification process may only include the surface modifying reaction step or, if it is desired to enhance the naturally occurring surface concentration of the carboxyl groups, may include both the activating and surface modifying steps.

### BRIEF DESCRIPTION OF DRAWINGS

Figure 1 is a flow diagram, in block form, depicting fields of application of the process of my invention to acrylics of various types and the desired characteristics imparted to the outermost surfaces of optical lenses of such acrylics.

Figure 2a is a flow diagram, in block form, of the surface activation step in the process of my invention.

Figure 2b depicts a chemical reaction in accordance with the activation step of Figure 2a.

Figure 3a is a flow diagram, in block form, of a surface modifying step in the process of my invention for producing an outermost surface on an acrylic polymer lens body having the characteristic of biological inertness, low glare, and soil resistance.

Figure 3b depicts chemical reactions in accordance with the surface modifying step of Figure 3a with the last reaction including a diagrammatic illustration of the surface formed on the lens body.

Figure 4 depicts a chemical reaction of a silane reagent and perfluoroalkyl carboxylic acid according to Figure 3a illustrating three reaction products formed thereby, each of which is employed in the surface modifying reaction.

Figure 5a is a flow diagram, in block form, of a surface modifying step in the process of my invention for producing an outermost surface on an acrylic polymer lens body having the characteristic of cytotoxicity.

Figure 5b depicts a chemical reaction in accordance with the surface modifying step of Figure 5a.

Figure 5c is a diagrammatic representation of the chemical reaction of Figure 5b illustrating the bonding of the select chemical group Penicillin-N to the outermost surface of an optical lens body.

Figure 5d depicts the chemical formula of polymyxin-B which may be utilized in the reaction of Figure 5b in place of Penicillin-N when it is desired to produce a lens surface having anti-bacteriological characteristics.

Figure 6a is a flow diagram, in block form, of a surface modifying step in the process of my invention for producing an outermost surface on an acrylic polymer lens body having a ultra violet light absorbing characteristic.

Figure 6b depicts the chemical reaction in accordance with the surface modifying step of Figure 6a.

### DETAILED DESCRIPTION OF INVENTION

According to the invention we provide an optical lens comprising:
a lens body of an acrylic polymer; and
an outermost surface of the lens body having carboxyl groups on polymer chains of the acrylic polymer, wherein the surface has been modified by bonding to said carboxyl groups a chemical group selected from a perfluoroalkyl group, an alkyl group (CH₂)ₓCH₃ where x = 2 to 12, a siloxyl group, cyclohexyl, a UV absorber or a cytotoxic polypeptide, the chemical group being bonded to the surface of the lens body by a sillyl ester.

The modification of the outermost surface of the lens body is accomplished by reacting a reagent including the select chemical group with reactive carboxyl groups on polymer chains at the outermost surface of the acrylic polymer to bind the select chemical group to and modify the molecular structure of the surface of the lens body. Usually, the reactive carboxyl groups are formed by an activation step wherein a surface activating hydrolysis reaction occurs at the outermost surface of the acrylic polymer to generate a high concentration of reactive carboxyl groups on polymer chains at the outermost surface of the lens body. The activation step is followed by a surface modifying step wherein the activated outermost surface of the lens body is reacted with a reagent including the select chemical group.

According to a further feature of the invention we provide a method of modifying the outermost surface of an acrylic polymer optical lens body to have selected and desired surface characteristics, comprising:
(1) activating the outermost surface of the lens body by a surface activating hydrolysis reaction to generate a high concentration of carboxyl groups on polymer chains of the acrylic polymer at the outermost surface or the lens body and
(2) modifying the activated outermost surface of the lens body by reacting a reagent including a chemical group selected from a perfluoroalkyl group, an alkyl group (CH₂)ₓCH₃ whre x = 2 to 12, a siloxyl group, cyclohexyl, a UV absorber or a cytotoxic polypeptide with the carboxyl groups to bond the chemical group to and modify the molecular structure of the surface of the lens body, the chemical group being bonded to the surface of the lens body by a silyl ester.

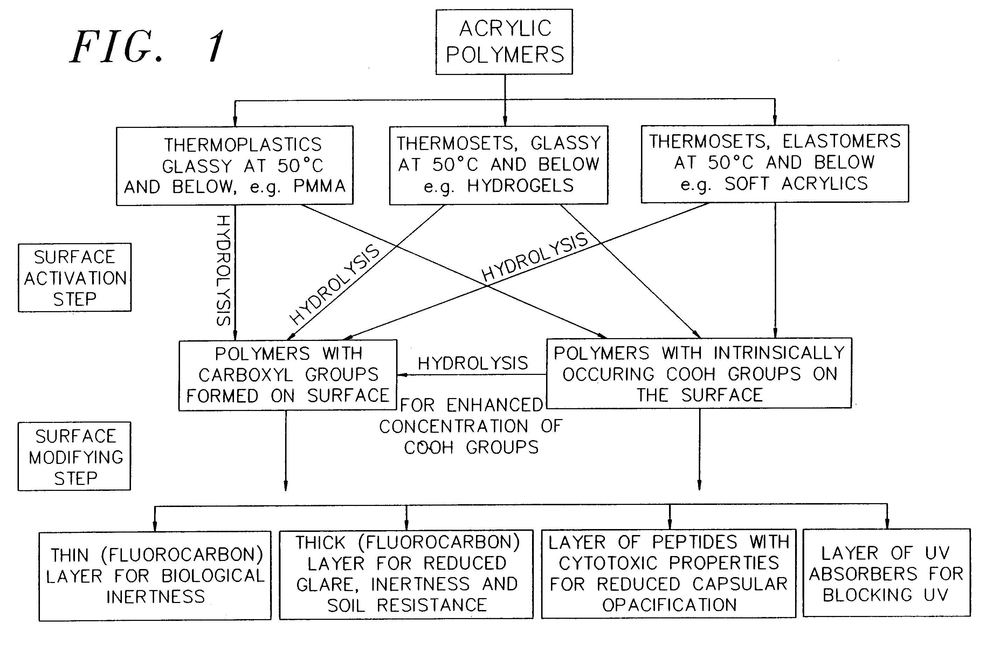

Figure 1 depicts in block form the field of application of the process of my invention to acrylics of various types and the desired characteristics imparted to the outermost surface of optical lenses of such acrylics. More specifically, the surface modification process of my invention is applicable to any acrylic polymer or copolymer except those which are constituted of an acrylic or methacrylic acid in concentrations in excess of 50%. As depicted in Figure 1, the acrylic polymers to which my activation process is applicable include (1) thermoplastics which are glassy at 50°C and below including poly methyl methacrylate (PMMA), polysulfones and polycarbonates, (2) thermosets such as hydrogels, crosslinked hard acrylics and epoxy which are glassy at 50°C and below and (3) thermosets elastomeric at 50°C and above such as soft acrylics, polyacrylamides, polyacrylic acids and cellulose.

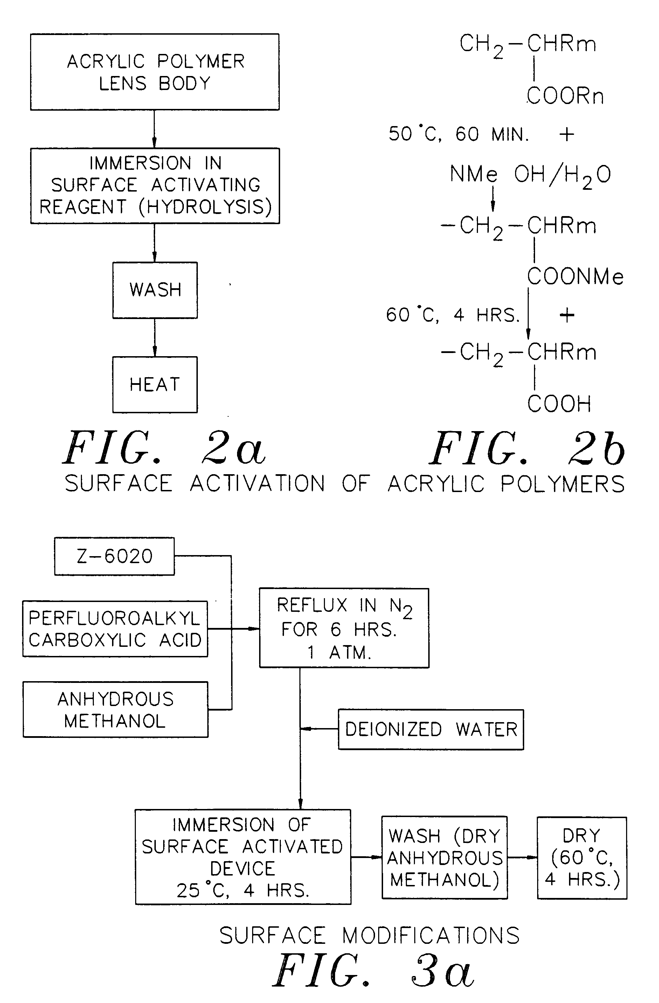

For each type of acrylic polymer, the surface activation step produces an outermost surface on the lens body having a high concentration of reactive carboxyl groups. As previously stated, the surface activation step involves a surface activating hydrolysis reaction as depicted in Figures 2a and 2b. As there illustrated, the acrylic polymer lens body is immersed in a surface activating reagent to subject the outermost surface of the acrylic polymer to hydrolysis and the formation of a high concentration of reactive carboxyl groups on polymer chains at the outermost surface of the lens body. Following the immersion process, the lens body is removed from the reagent, washed and heated in an oven for several hours. In the chemical reaction depicted in Figure 2b, the acrylic polymer is reacted with a tetraalkylammonium hydroxide at room temperature for about 60 minutes. Preferably, the reagent comprises a highly concentrated (e.g. 35%) aqueous solution of tetramethylammonium hydroxide. The lens body is immersed in such a reagent at 50°C for about 60 minutes. After immersion, the lens is withdrawn from the solution, washed deionized or distilled water and then heated and dried at about 60°C in a convection oven with circulating air for 4 hours. The process of immersion hydrolyzes the ester groups on the surface of the acrylic polymer and forms an ammonium salt as shown in Figure 2b. The heating and drying process drives off ammonia and leaves the surface with a high concentration of free and reactive carboxylic acid (carboxyl groups). In such an activation step, carboxyl groups are formed on the polymer chains at the surface of the acrylic polymer without causing chain scission or allowing permeation of the activating reagent into the bulk of the acrylic polymer. This results from the activation reaction being conducted under mild conditions and for a short period of time.

As also depicted in the diagram of Figure 1, some acrylic polymers naturally possess a high concentration of carboxyl groups on their surface. Such polymers are included in each of the three types of acrylic polymers to which the surface modification of my invention applies. For such polymers, the concentration of carboxyl groups may be sufficient naturally to proceed directly to the surface modifying step of the process of my invention. However, it may be desired to further enhance the concentration of carboxyl groups. In that event, the surface activating step is applied as depicted in Figure 1 to produce a polymer with an even higher concentration of carboxyl groups on the outermost surface of the acrylic polymer lens body.

Having achieved surface activation either by the hydrolysis reaction or by use of a polymer having a sufficiently high naturally occurring concentration of carboxyl groups on its outermost surface, the lens body is ready for the surface modifying step of my invention. Generally speaking, the surface modifying step is accomplished by reacting a reagent including a select chemical group with the reactive carboxyl groups on the polymer chains of the outermost surface of the acrylic polymer to bond the select chemical group to and modify the molecular structure of the surface of the lens. Usually in the surface activating step, the acrylic surface activated to bear a high concentration of carboxyl groups is reacted with a silane reagent to complete the surface modification process. A typical reagent for the surface modifying step comprises a molecule incorporating a reactive silane group and a group whose presence is desired on the acrylic surface. Hence, the typical reagent may have a formula R₁-X-R₂, where R₁ is a silane group, R₂ is a group whose presence is desired on the surface, and X is a joining group, which may or may not be needed. Silanes are versatile reagents since they may be derivatized to incorporate many different R₂ groups. Reagents bearing silane end groups and different R₂ groups may be readily synthesized from commercially available silane (R₁A) and appropriate reagents bearing R₂ groups (R₂B). However, it should be noted that silane reagents do not react with carboxyl groups efficiently unless they are reacted with water to convert the alkoxy silane groups to silanol immediately prior to use. Thus, the surface modifying reagent is maintained as the alkoxy derivative until just before use. Then, the silanol groups, formed by the addition of water, are reactive to the surface (COOH groups) and to themselves. In particular, the silanol groups react with carboxyl groups on the activated acrylic surface to form silyl esters.

Table 1 below lists various silane reagents R₁A, reagents bearing appropriate R₂ groups (R₂B) and the surface thicknesses and properties associated with the outermost surfaces of acrylic polymer optical lenses formed by the surface modifying step incorporating such R₁A and R₂B reagents.

**TABLE 1**

| R₁A | R₂B | SURFACE THICKNESS | PROPERTIES |
|---|---|---|---|
| Trialkoxyamino Silanes | Perfluoroalkyl Reagents | 50-100 A | Biological Inertness, High Contact Angle with Water |
| Trialkoxyamino Silanes | Perfluoroalkyl Reagents | 2000 - 6000 A | Low Glare or Reflection, Biological Inertness, Anti-Soiling Properties |
| Trialkoxy Silanes, Chlorosilanes | Cytotoxic Polypeptides | 5000 - 10,000 A | Cytotoxin; Antibacterial |
| Trialkoxy Acryloxy Silanes | Benzophenone; Benzotriazole | 5000 - 10,000 A | UV Absorbing (≦ 430 nm) |

For the R₁A reagents, the trialkoxy aminosilane reagent may be depicted by the formula;

(OMe)₃Si(CH₂)₃NH(CH₂)₃NH₂

the trialkoxy silane reagent may be depicted the the formula;

(OCH₃)₃Si(CH₂)₃NH₂

the chlorosilane reagent may be depicted by the formula;

ClSi(CH₃)₂(CH₂)₂CH₂C₆H₅

and may be Z6076 available from Union Carbide; and the trialkoxyacryloxy silane reagent may be depicted by the formula:

CH₂=C(CH₃)COO(CH₂)₃Si(OCH₃)₃

For the R₂B reagents, the perfluoroalkyl derivatives may be depicted by the formula:

COOH(CF₂)_{X}CF₃

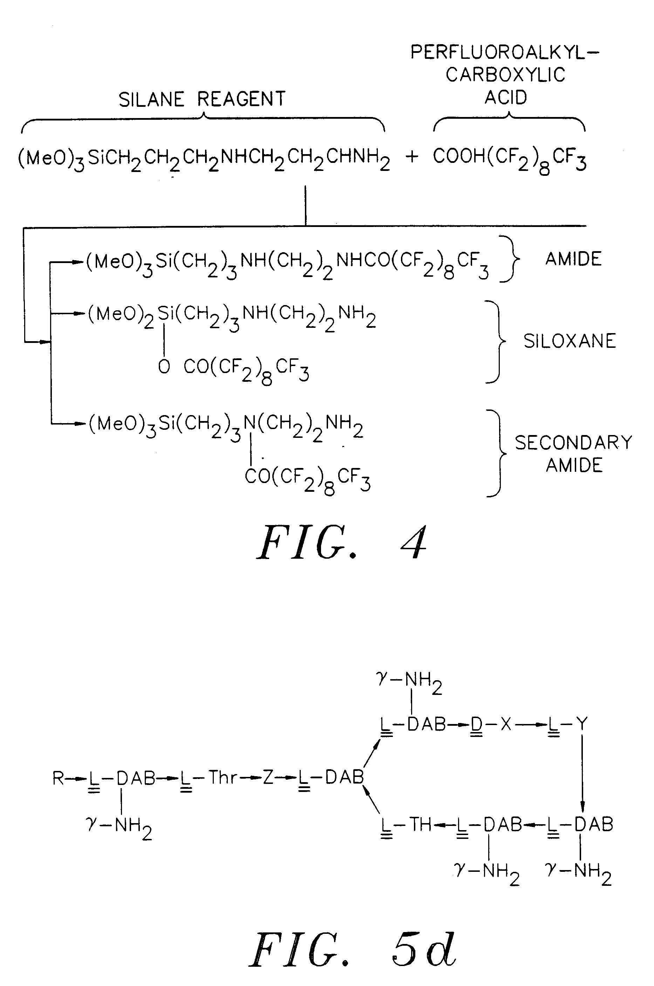

WHERE X = 2-12
the cytotoxic polypeptides may be penicillin-N depicted by the formula; 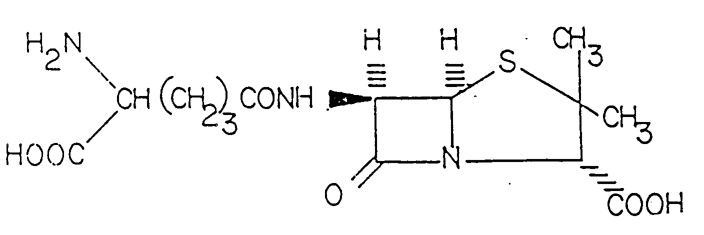
or polymyxin-B as illustrated in Figure 4; and where the benzophenone is a 2 hydroxy-4(ethoxy acryloxy) derivative, and benzotriazole is a 2-hydroxy 5-ethoxyacryloxy derivative represented generally by the formulas: 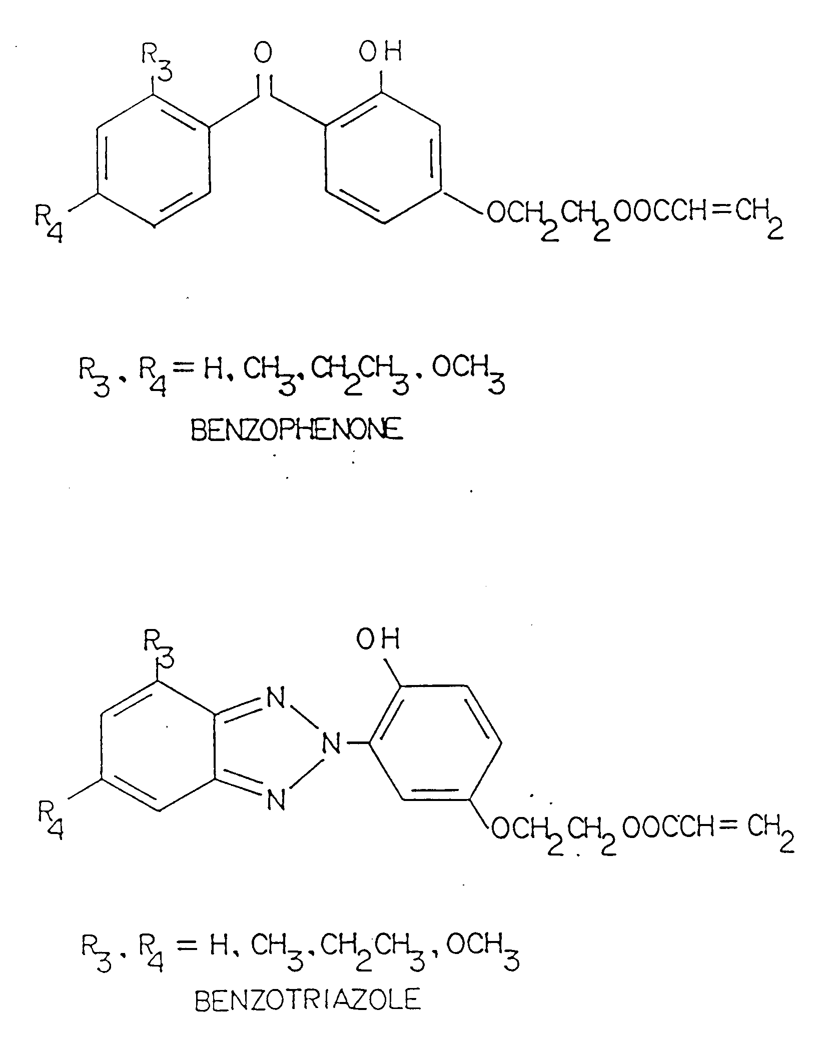
As depicted in Figure 1 and Table 1, the surface modifying step will result in a lens body having a biological inertness when the select chemical group is a relatively thin layer and will possess the characteristics of biological inertness, reduced glare and soil resistance when the surface layer is relatively thick. In such instances, the select chemical group may be a fluorocarbon such as a perfluoro derivative defined by the foregoing formula COOH(CF₂)ₓCF₃. Alternatively, the select chemical group may be an alkyl group (CH₂)ₓCH₃ where x = 2 to 12, a siloxane group (SiOR)₃ and R is a methyl, ethyl or alkyl (CH₂)ₓCH₃ group where x = 1 to 8, or where the select chemical group is a cyclohexyl group C₆H₁₁.

There is also provided a method of modifying the outermost surface of an acrylic polymer optical lens body to have a select and desired surface characteristic, comprising:
reacting a reagent including a chemical group selected from a perfluoroalkyl group, an alkyl group (CH₂)ₓCH₃ where x = 2 to 12, a siloxyl group cyclohexyl, a UV absorber or a cytotoxic polypeptide with carboxyl groups on polymer chains at an outermost surface of the acrylic polymer to bond the chemical group to and modify the molecular structure of the surface of the lens body, the reagent further including a reactive silane group for linking the chemical group to the surface of the lens body by a silyl ester.

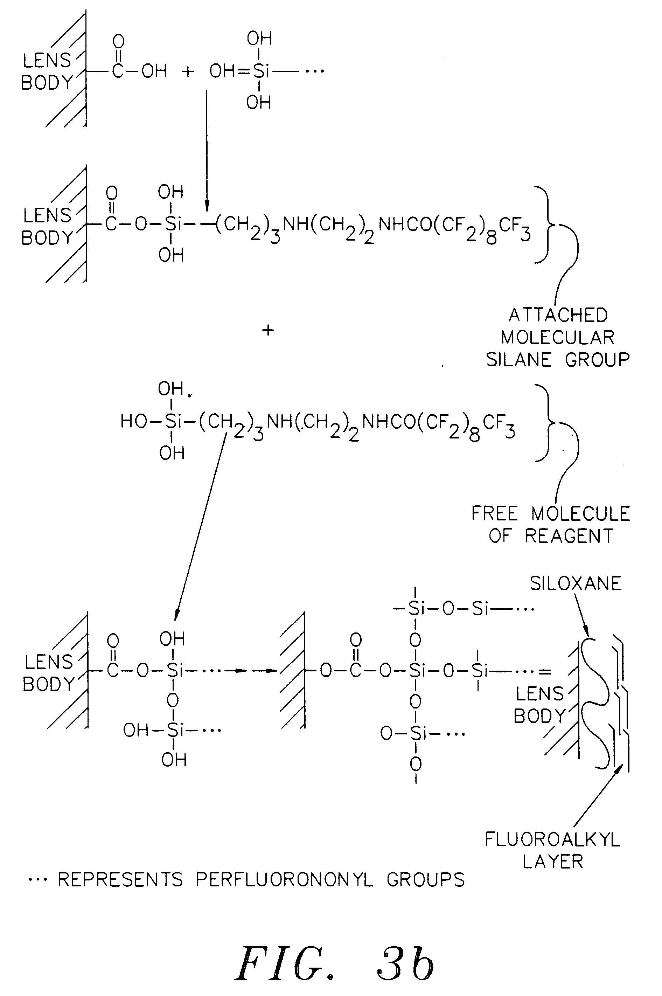

Figures 3a and 3b depict the chemical reaction for the surface modifying step when the select chemical group is a perfluoro group. Reagents for the alkyl, siloxyl and cyclohexyl groups are well known in the art and may be utilized in the manner illustrated by the flow diagram of Figure 3a to produce the modified surface of the acrylic polymer lens having the characteristics of biological inertness, glare reduction and soil resistance associated with the perfluoro group as hereinafter described. More specifically, and by way of example, a surface modifying reagent particularly useful with the perfluoro group may be prepared by reaction of n-aminoethyl aminopropyl trimethoxy silane, commercially available as Z-6020 from Dow Corning Corporation, with perfluorodecanoic acid in anhydrous methanol under reflux in an atmosphere of nitrogen gas for 24 hours. The concentration of Z-6020 should be in the range of 5 x 10⁻² moles per liter to 1 x 10⁻⁴ moles per liter and preferably 1 x 10⁻³ moles per liter. Such a concentration yields a surface modified layer of a thickness of 50 to 100 angstroms (50 to 100 . 10⁻¹⁰m). For thicker layers, higher For thicker layers, higher concentrations are needed. The molar concentration of the perfluorodecanoic acid may be either equal to that of the Z-6020 or may be an integral multiple thereof. Preferably, it is the same as Z-6020.

As illustrated in Figure 4, the reaction product may be an amide. In fact, three different modes of attachment between the two reagents are possible, an amide, a siloxane, and a secondary amide. Each contributes to the biological inertness of the surface and each enters into the surface modification reaction. When the reaction is complete, the reaction product may be cooled, transferred to a flask, and stored in a sealed bottle for up to 24 hours.

At any time prior to use of the reagent in immersion of the surface activated lens body as depicted in Figure 3a, the efficacy of the solution may be tested using a glass test plate. In such a procedure, the first step is to prepare a batch of glass slides by dipping them in a 20% by weight aqueous solution of sodium hydroxide for 10 minutes then rinsing them thoroughly with distilled or deionized water. The second step is to dip one end of one or more of the glass slides into the surface modifying reagent for a minimum of 30 seconds. The third step is to wash the treated glass slide in methanol and dry in an oven for 10 minutes. Finally, the contact angle on the treated portion of the glass slide is measured with a water drop in a goniometer. The solution is good and suitable for use if the contact angle exceeds 78°.

After completion of the reaction of the silane reagent with the perfluorodecanoic acid, or after the efficacy of the resulting solution is determined, the surface activated lens body may be placed in a Teflon holder and immersed in the surface modifying reagent. As illustrated in Figure 3a, and for the purposes previously described, deionized water is added to the solution at a concentration of 1 volume percent of the surface modifying reagent. The lens body is immersed in the surface modifying reagent for 16 hours under reflux. The lens body is subsequently withdrawn from the surface modifying reagent, washed several times in dry anhydrous methanol for approximately 30 seconds per wash and then dried in an oven at 60°C for about 4 hours. In practice, the results of such a process were tested by measurement of contact angle on a goniometer using 0.1 ml drops of deionized water. Contact angles measured on a batch of 30 intraocular lenses made of PMMA ranged from 98 to 106°, with a mean of 100°.

As previously stated, for the concentration ranges referred to above, the surface modified layer produced by the process reactions of Figures 3a and 3b have a thickness of between 50 and 100 angstroms (50 to 100.10⁻¹⁰m). In many cases, and particularly in the cases of select chemical groups producing biological inertness, the properties exhibited by the modified surface depend on the thickness of the modified layer. The thickness of the surface modified layer developed by a silane reagent is controlled by adjusting the concentrations of the surface modifying reagent and the period of the immersion reaction. Since the silane reagent has a multiple (3) silanol groups per molecule of reagent, two silanol groups are left on each reagent molecule subsequent to its reaction with the reactive carboxyl groups at the outermost surface of the lens body. The anchored silane molecule may react with a free silane molecule in solution to form a siloxane bond. The free silane molecule is thus anchored on a first bound silane molecule and serves to build up multiple layers of silane derivatives each bearing a perfluorononyl group as shown in Figure 3b. Reaction of the bound silane molecule with free silane molecules in solution compete in its reaction with a bound neighbor, hence substantial build up of the modified layer is achieved only at high concentrations of free saline reagent in solution. When the free salines are depleted, the bound salines react with each other exhausting all the silanol groups and forming siloxane bonds. This reaction may take elevated temperatures (60°C) and considerable time (4 hours). The siloxane bonds serve to crosslink the surface modified layer, increasing its density, reducing its hydrophilicity and increasing its hardness. Thus, surface modifications reactions carried out using high concentrations of free silanes produce a thick surface modification layer which is uncrosslinked, soft and hydrophilic except at its uppermost layers while the use of dilute solutions of the surface modifying reagent produce a thin crosslinked hard layer.

Preferably, to produce a surface modification which is characterized by biological inertness and resistance to soiling, it has been found that the thickness of the surface modification layer should be in a range from 2000 to 6000 angstroms (2000 to 6000 . 10⁻¹⁰m). In that range of thickness, it has been found that substantial glare reduction occurs. In particular, it is known that the refractive index of an acrylic with long chains of perfluoroalkyl substitutions is lower than that of acrylics such as PMMA. Hence, if the surface modified layer is built up to a thickness ranging from 2000 to 6000 angstroms (2000 to 6000 . 10⁻¹⁰m), the lower refractive index of the surface will reduce the reflectivity of the surface. The surface reflectivity reaches a minimum and is no more than 0.5%, when the refractive index of the surface layer is the geometric mean of the refractive index of the acrylic polymer forming the lens body and that of the surrounding medium. Since the refractive index of the acrylic polymer such as PMMA is 1.493, and that of the ocular medium in which the optical lens is placed is about 1.36, the desired refractive index of the surface layer is 1.423. Refractive index may be achieved by bonding perfluoroalkane chains having a refractive index ranging from 1.40 to 1.42. Such a reduction of surface reflection leads to reduced glare from the surface of the optical lens. Studies suggest that glare from conventional PMMA lenses with a 6 mm optic may be reduced by more than 50% by using an optimal thickness of 6000 angstroms (6000 . 10⁻¹⁰m) of a perfluoroalkyl layer formed by the method of my invention.

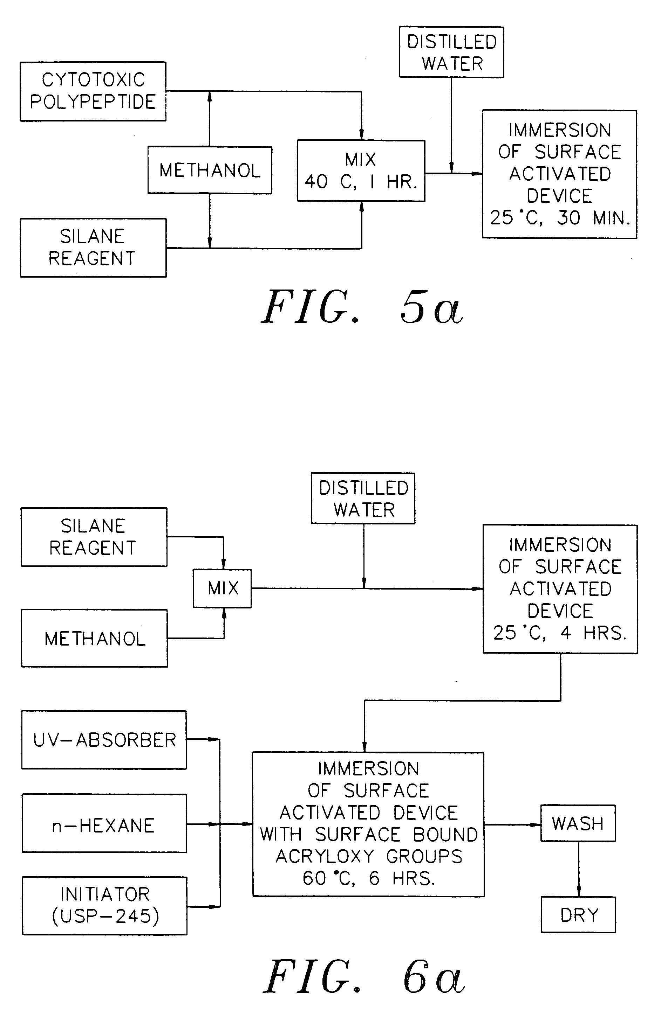

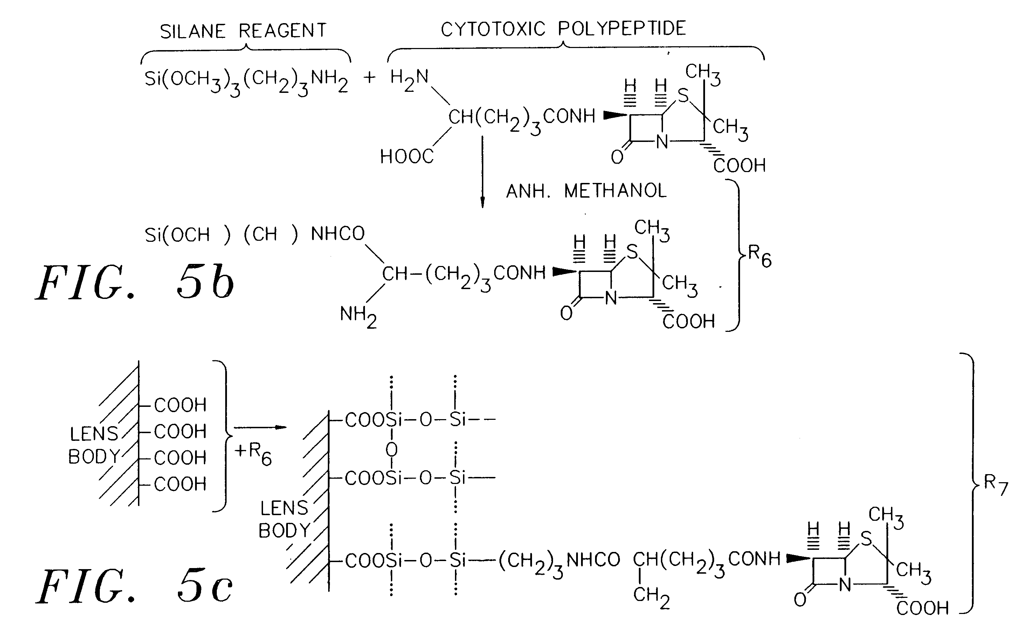

As previously stated, one of the desired characteristics associated with the surface modified acrylic polymer optical lens of my invention, is cytotoxicity or anti-bacterial properties. Figure 5a illustrates, in block form, the surface modifying step for producing such a surface modification of an acrylic polymer lens body. Figures 5b and 5c depict the chemical reaction and the manner in which the select chemical group is bound to the outermost surface of the acrylic polymer lens body according to the chemical reaction of Figure 5b.

More specifically, for the physical characteristic of cytotoxicity, cytotoxic polypeptides may be utilized as the select chemical group. For example, as depicted in Figures 5b and 5c, a barium salt of 9-penicillin (Penicillin-N) is dissolved in anhydrous methanol at a concentration ranging from 1 x 10⁻⁴ moles per liter to 1 x 10⁻³ moles per liter. A trialkoxy silane is dissolved in anhydrous methanol at the same concentration. Equal volumes of the two solutions are mixed together and warmed in a water bath at approximately 40°C for 1 hour in the absence of moisture or air. At the end of 1 hour, the reaction is completed and, if desired, the surface modifying reagent (R₆) may be stored for several hours in the absence or air or moisture.

To ready the surface modifying solution it is hydrated with 1% distilled water (0.026 moles per liter) just before use. The surface activated acrylic polymer lens body is then immersed in the solution for 30 minutes at 25°C for surface modification and attachment of the select chemical group to occur. A layer of about 5000 to 1000 angstroms (5000 to 1000 . 10⁻¹⁰m) thickness having the structure represented as R₇ in Figure 5c is permanently bound to the surface by the foregoing method.

The foregoing procedure is generally applicable to all polypeptides including polymyxin-B as illustrated in Figure 5d. Polymyxin-B is a mixture of polymyxins B₁ and B₂. Polymyxin B₁ is C₅₆H₉₆N₁₆O₁₃, where R = (+) -6- Methyloctanoyl; X = Phenylalanine; Y = Leucine; and Z = L-DAB. Polymyxin B₂ is C₅₅H₉₆N₁₆O₁₃, where R = 6-Methyheptanoyl; X = Phenylalanine; Y = Leucine; and Z = L-DAB. In the case of Penicillin-N, the resulting outermost surface of the lens body is cytotoxic and prevents bacterial growth and hence prevents ophthalmitis. In the case of polymyxin-B, the surface exhibits an anti-bacterial property principally effective against gram-negative bacteria.

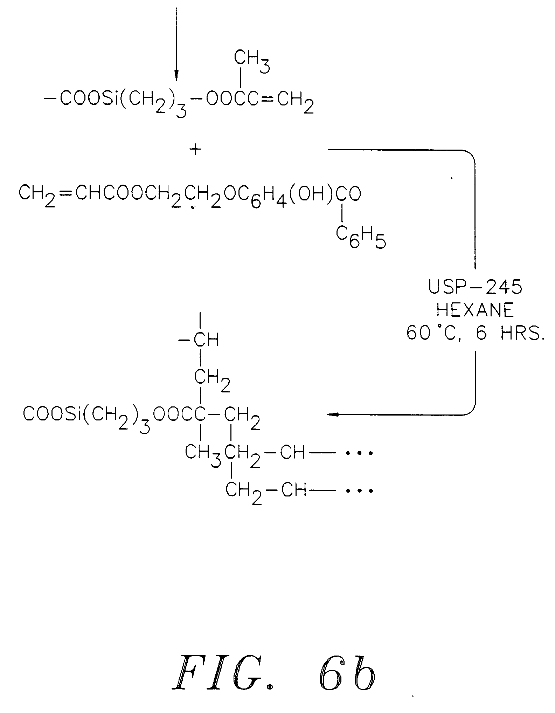

As previously stated, one of the desired characteristics of the outermost surface of an acrylic polymer optical lens, is that it be UV light absorbing. The surface modifying step of my invention for producing such a surface is depicted in Figures 6a and 6b. As represented, this is a two step process. First, an appropriate silane reagent is mixed with methanol. Distilled water is added to the solution readying it to receive the surface activated acrylic polymer lens body preferably at room temperature for approximately 4 hours. Separately, an appropriate UV absorber is mixed with an inert solvent and a polymerization initiator and the surface activated lens body is removed from the solution of the silane reagent and immersed in the UV absorber solution for polymerization at about 60°C for 6 hours. The resulting lens is washed and then dried.

More particularly, in the first step, the silane reagent is preferably a trialkoxyacryloxy derivative. It is mixed with methanol such that the resulting solution has a concentration of the silane reagent of approximately 2 x 10⁻² moles per liter. As previously stated, the solution is hydrated with distilled water (a 1% solution) prior to use. The reaction of the surface activated acrylic polymer lens body with the silane solution is at room temperature for 4 hours. This results in a layer of acryloxy silane groups being bonded to the outer surface of the activated acrylic polymer lens body. The thickness of the layer is in a range of 1000 to 5000 angstroms (1000 to 5000 . 10⁻¹⁰m) with 2000 angstroms (2000 . 10⁻¹⁰m) being optimum. Such a range has been found to be optimum for UV absorption and for minimal light scatter.

The acryloxy silane group bearing surface formed by the first step is ready for the second step which involves the polymerization of an acryloxy derivative of the UV absorber with surface bound acryloxysilane groups. The UV absorber chromophore may be a benzophenone or benzotriazole. The polymerization reaction involving the UV absorber is carried out in a hexane solution. For example, a 0.1 mole per liter solution may be prepared by dissolving 3 grams of the UV absorber derivative 2-hydroxy 4-ethoxyacryloxy benzophenone in 1 liter of n-hexane. 100 mg of a free radical initiator such as USP-245 available commercially from Union Carbide Corporation is added to the solution. The optical lens body is immersed in the solution which is then deareated. The solution is maintained at about 60°C for 6 hours. The resulting layer of acryloxy groups at the surface of the lens body is copolymerised with the acryloxy derivative of the UV absorber as shown in Figure 6b. Use of a lower polymerization temperature, a higher catalyst concentration and a longer reaction time will lead to prolongation of the surface polymerization reaction and a thicker layer of polymerized UV absorber derivative, if desired.

After the polymerization reaction is completed the lens body is thoroughly washed in cold methanol to remove any polymeric UV absorber formed in solution, but precipitated on the surface of the lens body. The lens body is subsequently dried in a vacuum oven and its absorption spectrum is recorded. For example, a 7000 angstrom (7000 . 10⁻¹⁰m) layer will have an optical density of 3.5 at 360 nm and will have an absorption of 90% of UV light at 380 nm. Other types of UV absorber derivatives may be attached in a similar fashion among them acryloxy derivatives of 2-hydroxyphenyl benzotriazole.

There is provided a method of modifying the outermost surface of an acrylic polymer optical lens body to have selected and desired ultra violet light absorbing characteristics, comprising:
immersing the lens body in an aqueous mixture of trialkoxyacryloxy silane reagent and methanol and polymerizing an acryloxy derivative of a UV absorber with acryloxysilane groups bound to the surface of the lens body, and
a method of activating the surface of an acrylic polymer lens body comprising reacting the acrylic polymer surface of the lens body with a concentrated aqueous solution of a tetramethylammonium hydroxide, washing and then heating the lens body to drive off ammonia leaving active carboxyl groups linked to a polymer chain at the outermost surface of the acrylic polymer.

From the foregoing, it should be appreciated that my present invention provides a lens body of an acrylic polymer characterized by an outermost surface modified in molecular structure to possess desired characteristics such as biological inertness, low glare, soil resistance, UV absorbance and cytotoxic and anti-bacterial properties.

## Claims

1. An optical lens comprising:
a lens body of an acrylic polymer; and
an outermost surface of the lens body having carboxyl groups on polymer chains of the acrylic polymer, wherein the surface has been modified by bonding to said carboxyl groups a chemical group selected from a perfluoroalkyl group, an alkyl group (CH₂)ₓCH₃ where x = 2 to 12, a siloxyl group, cyclohexyl, a UV absorber or a cytotoxic polypeptide, the chemical group being bonded to the surface of the lens body by a silyl ester.

2. The optical lens as claimed in Claim 1, wherein the UV absorber is a benzophenone or a benzotriazole and wherein acryloxysilane is bound to the carboxyl groups and the UV absorber is bound to the acryloxysilane by polymerisation of an acryloxy derivative of the UV absorber with the bound acryloxy silane.

3. The optical lens according to claim 1 comprising:
a lens body of an acrylic polymer; and
a surface of the lens body modified in molecular structure to possess a desired characteristic by reacting a reagent including a select chemical group having the desired lens surface characteristic and including reactive silane groups for linking the select chemical group to active carboxyl groups on polymer chains at an outermost surface of the acrylic to bond the select chemical group to and modify the molecular structure of the surface of the lens.

4. The optical lens as claimed in Claim 2 wherein the acryloxysilane is a trialkoxy acryloxy silane.

5. The optical lens as claimed in any of the preceding claims wherein the outermost surface of the lens body has a thickness between 5000 and 10,000 angstroms (5000 and 10,000 . 10⁻¹⁰m).

6. The optical lens of Claim 1, wherein the chemical group is a perfluoroalkyl group and the outermost surface has a thickness between 50 and 100 angstroms (50 and 100 . 10⁻¹⁰m) to provide a biologically inert surface for the lens body.

7. The optical lens of Claim 1, wherein the chemical group is a perfluoroalkyl group and the outermost surface has a thickness between 2000 and 6000 angstroms (2000 and 6000 . 10⁻¹⁰m) to provide a biologically inert, low glare and soil resistant surface for the lens body.

8. The optical lens of Claim 1, wherein the chemical group is a cytotoxic polypeptide.

9. The optical lens of Claim 8, wherein the polypeptide is penicillin-N or polymyxin-B.

10. A method of modifying the outermost surface of an acrylic polymer optical lens body to have selected and desired surface characteristics, comprising:
(1) activating the outermost surface of the lens body by a surface activating hydrolysis reaction to generate a high concentration of carboxyl groups on polymer chains of the acrylic polymer at the outermost surface of the lens body and
(2) modifying the activated outermost surface of the lens body by reacting a reagent including a chemical group selected from a perfluoroalkyl group, an alkyl group (CH₂)ₓCH₃ where x = 2 to 12, a siloxyl group, cyclohexyl, a UV absorber or a cytotoxic polypeptide with the carboxyl groups to bond the chemical group to and modify the molecular structure of the surface of the lens body, the chemical group being bonded to the surface of the lens body by a silyl ester.

11. The method of Claim 10, wherein in step (1) the carboxyl groups are linked to the polymer chains by reacting the acrylic polymer at the outermost surface of the lens body with a concentrated aqueous solution of a tetramethylammonium hydroxide then washing and heating the lens body to drive off ammonia.

12. The method of Claim 11, wherein in step (2) the reagent further includes reactive silane groups for linking the chemical group to the carboxyl groups.

13. The method of Claim 12, wherein in step (2) the chemical group is perfluoroalkyl, alkyl, siloxane or cyclohexyl group.

14. The method of Claim 13, wherein in step (2) the chemical group is the perfluoroalkyl group and wherein the reagent is a perfluoroalkyl reagent mixed with a silane reagent and methanol, the lens body is immersed in the reagent, washed and dried to produce a fluoroalkyl layer the thickness of which is controlled by the concentration of the silane reagent to be between 50 and 100 angstroms (50 and 100 . 10⁻¹⁰m) to provide a biologically inert surface for the lens body or to be between 2000 and 6000 angstroms (2000 and 6000 . 10⁻¹⁰m) to provide a biologically inert, low glare and soil resistant surface for the lens body.

15. The method of Claim 14, wherein the silane reagent is a trialkoxy aminosilane reagent.

16. The method of Claim 12, wherein in step (2) the chemical group is a cytotoxic polypeptide and the reagent is a mixture of a silane reagent and methanol, the reagent is hydrated with water and the lens body immersed in the reagent.

17. The method of Claim 16, wherein the polypeptide is penicillin-N or polymyxin-B.

18. The method of Claim 17, wherein the silane reagent is a trialkoxysilane or a chlorosilane.

19. The method of Claim 10, wherein step (2) comprises immersing the lens body in a aqueous mixture of a trialkoxy acryloxysilane reagent and methanol and polymerizing and acrylic derivative of a UV absorber with acryloxysilane groups bound to the surface of the lens body.

20. A method of modifying the outermost surface of an acrylic polymer optical lens body to have a select and desired surface characteristic, comprising:
reacting a reagent including a chemical group selected from a perfluoroalkyl group, an alkyl group (CH₂)ₓCH₃ where x = 2 to 12, a siloxyl group cyclohexyl, a UV absorber or a cytotoxic polypeptide with carboxyl groups on polymer chains at an outermost surface of the acrylic polymer to bond the chemical group to and modify the molecular structure of the surface of the lens body, the reagent further including a reactive silane group for linking the chemical group to the surface of the lens body by a silyl ester.

21. The method of Claim 20, wherein the chemical group is a perfluoroalkyl, alkyl, siloxane or cyclohexyl group.

22. The method of Claim 21, wherein the chemical group is the perfluoroalkyl group and wherein the reagent is a perfluoroalkyl reagent mixed with a silane reagent and methanol, and wherein the method further inlcudes controlling the concentration of the silane reagent to control the thickness of the modified surface to be between 50 and 100 angstroms (50 and 100 . 10⁻¹⁰m) to provide a biologically inert surface for the lens body or to be between 2000 and 6000 angstroms (2000 and 6000 . 10⁻¹⁰m) to provide a biologically inert, low glare and soil resistant surface for the lens body.

23. The method of Claim 20, wherein the chemical group is a cytotoxic polypeptide and the reagent is a mixture of a silane reagent and methanol.

24. A method of modifying the outermost surface of an acrylic polymer optical lens body to have selected and desired ultra violet light absorbing characteristics, comprising:
immersing the lens body in an aqueous mixture of trialkoxyacryloxy silane reagent and methanol and polymerizing an acryloxy derivative of a UV absorber with acryloxysilane groups bound to the surface of the lens body.

25. A method of activating the surface of an acrylic polymer lens body comprising reacting the acrylic polymer surface of the lens body with a concentrated aqueous solution of a tetramethylammonium hydroxide, washing and then heating the lens body to drive off ammonia leaving active carboxyl groups linked to a polymer chain at the outermost surface of the acrylic polymer.

## Patentansprüche

1. Optische Linse umfassend:
einen Linsenkörper aus einem Acrylpolymer und eine äußerste Oberfläche des Linsenkörpers mit Carboxylgruppen an Polymerketten des Acrylpolymers, bei welchem die Oberfläche durch Binden einer chemischen Gruppe, die aus einer Perfluoralkylgruppe, einer Alkylgruppe (CH₂)ₓCH₃, worin x = 2 bis 12 ist, einer Siloxylgruppe, Cyclohexyl, einem UV-Absorber oder einem zytotoxischen Polypeptid ausgewählt ist, an die Carboxylgruppen modifiziert worden ist, wobei die chemische Gruppe durch einen Silylester an die Oberfläche des Linsenkörpers gebunden ist.

2. Optische Linse wie in Anspruch 1 beansprucht, worin der UV-Absorber ein Benzophenon oder ein Benzotriazol ist und worin ein Acryloxysilan an die Carboxylgruppen gebunden ist und der UV-Absorber durch Polymerisation eines Acryloxyderivats des UV-Absorbers mit dem gebundenen Acryloxysilan an das Acryloxysilan gebunden ist.

3. Optische Linse gemäß Anspruch 1, umfassend:
einen Linsenkörper aus einem Acrylpolymer und eine Oberfläche des Linsenkörpers, die zum Besitzen einer gewünschten Eigenschaft in der molekularen Struktur modifiziert wurde, indem man ein Reagenz, das eine ausgewählte chemische Gruppe mit der gewünschten Eigenschaft der Linsenoberfläche einschließt und reaktionsfähige Silangruppen zum Binden der ausgewählten chemischen Gruppe an reaktionsfähige Carboxylgruppen an Polymerketten an einer äußersten Oberfläche des Acrylmaterials einschließt, unter Binden der ausgewählten chemischen Gruppe an die und Modifizieren der molekularen Struktur der Linsenoberfläche reagieren läßt.

4. Optische Linse wie in Anspruch 2 beansprucht, worin das Acryloxysilan ein Trialkoxyacryloxysilan ist.

5. Optische Linse wie in einem der voranstehenden Ansprüche beansprucht, worin die äußerste Oberfläche des Linsenkörpers eine Dicke zwischen 5000 und 10000 Ångström (5000 und 10000·10⁻¹⁰ m) besitzt.

6. Optische Linse von Anspruch 1, worin die chemische Gruppe eine Perfluoralkylgruppe ist und die äußerste Oberfläche zum Versehen des Linsenkörpers mit einer biologisch inerten Oberfläche eine Dicke zwischen 50 und 100 Ångström (50 und 100·10⁻¹⁰ m) besitzt.

7. Optische Linse von Anspruch 1, worin die chemische Gruppe eine Perfluoralkylgruppe ist und die äußerste Oberfläche zum Versehen des Linsenkörpers mit einer biologisch inerten, blendarmen und schmutzfesten Oberfläche eine Dicke zwischen 2000 und 6000 Ångström (2000 und 6000·10⁻¹⁰ m) besitzt.

8. Optische Linse von Anspruch 1, worin die chemische Gruppe ein zytotoxisches Polypeptid ist.

9. Optische Linse von Anspruch 8, worin das Polypeptid Penicillin-N oder Polymyxin-B ist.

10. Verfahren zum Modifizieren der äußersten Oberfläche eines optischen Linsenkörpers aus einem Acrylpolymer, um ausgewählte und gewünschte Oberflächeneigenschaften zu besitzen, umfassend:
(1) das Aktivieren der äußersten Oberfläche des Linsenkörpers durch eine die Oberfläche aktivierende Hydrolysereaktion unter Erzeugen einer hohen Konzentration von Carboxylgruppen an den Polymerketten des Acrylpolymers an der äußersten Oberfläche des Linsenkörpers und
(2) das Modifizieren der aktivierten, äußersten Oberfläche des Linsenkörpers durch Reagierenlassen eines Reagenzes, das eine chemische Gruppe einschließt, die aus einer Perfluoralkylgruppe, einer Alkylgruppe (CH₂)ₓCH₃, worin x = 2 bis 12, einer Siloxylgruppe, Cyclohexyl, einem UV-Absorber oder einem zytotoxischen Polypeptid ausgewählt ist, mit den Carboxylgruppen unter Binden der chemischen Gruppe an die und Modifizieren der molekularen Struktur der Oberfläche des Linsenkörpers, wobei die chemische Gruppe durch einen Silylester an die Oberfläche des Linsenkörpers gebunden wird.

11. Verfahren von Anspruch 10, bei welchem die Carboxylgruppen in Schritt (1) durch Reagierenlassen des Acrylpolymers an der äußersten Oberfläche des Linsenkörpers mit einer konzentrierten wäßrigen Lösung von Tetramethylammoniumhydroxid, anschließend Waschen und Erhitzen des Linsenkörpers zum Austreiben von Ammoniak mit den Polymerketten verbunden werden.

12. Verfahren von Anspruch 11, bei welchem das Reagenz in Schritt (2) weiter reaktionsfähige Silangruppen zum Binden der chemischen Gruppe an die Carboxylgruppen enthält.

13. Verfahren von Anspruch 12, bei welchem die chemische Gruppe in Schritt (2) eine Perfluoralkyl-, Alkyl-, Siloxan- oder Cyclohexylgruppe ist.

14. Verfahren von Anspruch 13, in welchem die chemische Gruppe in Schritt (2) die Perfluoralkylgruppe ist und bei welchem das Reagenz ein mit einem Silanreagenz und Methanol gemischtes Perfluoralkylreagenz ist, der Linsenkörper in das Reagenz getaucht, gewaschen und getrocknet wird, um eine Fluoralkylschicht zu liefern, deren Dicke durch die Konzentration des Silanreagenzes gesteuert wird und zum Versehen des Linsenkörper mit einer biologisch inerten Oberfläche zwischen 50 und 100 Ångström (50 und 100·10⁻¹⁰ m) beträgt oder zum Versehen des Linsenkörpers mit einer biologisch inerten, blendarmen und schmutzfesten zwischen 2000 und 6000 Ångström (2000 und 6000·10⁻¹⁰ m) beträgt.

15. Verfahren von Anspruch 14, bei welchem das Silanreagenz ein Trialkoxyaminosilanreagenz ist.

16. Verfahren von Anspruch 12, bei welchem die chemische Gruppe in Schritt (2) ein zytotoxisches Polypeptid ist und das Reagenz ein Gemisch eines Silanreagenzes und Methanol ist, das Reagenz mit Wasser hydratisiert wird und der Linsenkörper in das Reagenz getaucht wird.

17. Verfahren von Anspruch 16, bei welchem das Polypeptid Penicillin-N oder Polymyxin-B ist.

18. Verfahren von Anspruch 17, bei welchem das Silanreagenz ein Trialkoxysilan oder ein Chlorsilan ist.

19. Verfahren von Anspruch 10, bei welchem Schritt (2) das Eintauchen des Linsenkörpers in ein wäßriges Gemisch eines Trialkoxyacryloxysilanreagenzes und Methanol und das Polymerisieren eines Acrylderivats eines UV-Absorbers mit an die Oberfläche des Linsenkörpers gebundenen Acryloxysilangruppen umfaßt.

20. Verfahren zum Modifizieren der äußersten Oberfläche eines optischen Linsenkörpers aus Acrylpolymer, um ein ausgewähltes und gewünschtes Oberflächenmerkmal zu erhalten, umfassend das Reagierenlassen eines Reagenzes, das eine chemische Gruppe enthält, die aus einer Perfluoralkylgruppe, einer Alkylgruppe (CH₂)ₓCH₃, worin x = 2 bis 12, einer Siloxylgruppe, Cyclohexyl, einem UV-Absorber oder einem zytotoxischen Polypeptid ausgewählt ist, mit den Carboxylgruppen an den Polymerketten an einer äußersten Oberfläche des Acrylpolymers unter Binden der chemischen Gruppe an die und Modifizieren der molekularen Struktur der Oberfläche des Linsenkörpers, wobei das Reagenz weiter eine reaktionsfähige Silangruppe zum Binden der chemischen Gruppe an die Oberfläche des Linsenkörpers durch einen Silylester einschließt.

21. Verfahren von Anspruch 20, bei welchem die chemische Gruppe eine Perfluoralkyl, Alkyl-, Siloxan- oder Cyclohexylgruppe ist.

22. Verfahren von Anspruch 21, bei welchem die chemische Gruppe die Perfluoralkylgruppe ist und bei welchem das Reagenz ein mit einem Silanreagenz und Methanol gemischtes Perfluoralkylreagenz ist, und wobei das Verfahren weiter das Einstellen der Konzentration des Silanreagenzes zum Steuern der Dicke der modifizierten Oberfläche einschließt, um zum Versehen des Linsenkörper mit einer biologisch inerten Oberfläche zwischen 50 und 100 Ångström (50 und 100·10⁻¹⁰ m) zu betragen oder um zum Versehen des Linsenkörpers mit einer biologisch inerten, blendarmen und schmutzfesten Oberfläche zwischen 2000 und 6000 Ångström (2000 und 6000·10⁻¹⁰ m) zu betragen.

23. Verfahren von Anspruch 20, bei welchem die chemische Gruppe ein zytotoxisches Polypeptid ist und das Reagenz ein Gemisch eines Silanreagenzes und Methanol ist.

24. Verfahren zum Modifizieren der äußersten Oberfläche eines optischen Linsenkörpers aus Acrylpolymer, so daß er ausgewählte und gewünschte Eigenschaften des Absorbierens ultravioletten Lichts besitzt, umfassend:
das Eintauchen des Linsenkörpers in ein wäßriges Gemisch eines Trialkoxyacryloxysilanreagenzes und Methanol und Polymerisieren eines Acryloxyderivats eines UV-Absorbers mit an die Oberfläche des Linsenkörpers gebundenen Acryloxysilangruppen.

25. Verfahren zum Aktivieren der Oberfläche eines Linsenkörpers aus Acrylpolymer, welches das Reagierenlassen der Acrylpolymeroberfläche des Linsenkörpers mit einer konzentrierten wäßrigen Lösung von Tetramethylammoniumhydroxid, Waschen und anschließend Erhitzen des Linsenkörpers zum Austreiben von Ammoniak umfaßt, wodurch reaktionsfähige Carboxylgruppen hinterlassen werden, die an eine Polymerkette an der äußersten Oberfläche des Acrylpolymers gebunden sind.

## Revendications

1. Lentille optique comprenant :
un corps de lentille fait d'un polymère acrylique; et
une surface extérieure du corps de lentille ayant des groupes carboxy sur des chaînes polymères du polymère acrylique, dans laquelle la surface a été modifiée par la liaison de ces groupes carboxy à un groupe chimique sélectionné parmi un groupe perfluoroalkyle, un coupe alkyle (CH₂)ₓCH₃ dans lequel x est 2 à 12, un groupe siloxy, un groupe cyclohexyle, un absorbeur d'UV ou un polypeptide cytotoxique, le groupe chimique étant lié à la surface du corps de lentille par un ester silylique.

2. Lentille optique suivant la revendication 1, dans laquelle l'absorbeur d'UV est une benzophénone ou un benzotriazole et dans laquelle de l'acryloxysilane est lié aux groupes carboxy et l'absorbeur d'UV est lié à l'acryloxysilane par polymérisation d'un dérivé acryloxy de l'absorbeur d'UV avec l'acryloxy silane lié.

3. Lentille optique suivant la revendication 1, comprenant:
un corps de lentille fait d'un polymère acrylique; et
une surface du corps de lentille dont la structure moléculaire est modifiée pour posséder une caractéristique désirée par réaction d'un réactif comprenant un groupe chimique sélectionné ayant la caractéristique de surface de lentille désirée et incluant des groupes silanes réactifs pour la liaison du groupe chimique sélectionné aux groupes carboxy actifs sur des chaînes polymères à la surface extérieure du polymère acrylique de façon à lier le groupe chimique sélectionné à la surface de la lentille et à modifier la structure moléculaire de celle-ci.

4. Lentille optique suivant la revendication 2, dans laquelle l'acryloxysilane est un trialcoxy acryloxy silane.

5. Lentille optique suivant l'une quelconque des revendications précédentes, dans laquelle la surface extérieure du corps de lentille a une épaisseur comprise entre 5.000 et 10.000 Â (5.000 et 10.000 . 10⁻¹⁰ m).

6. Lentille optique suivant la revendication 1, dans laquelle le groupe chimique est un groupe perfluoroalkyle et la surface extérieure a une épaisseur comprise entre 50 et 100 Â (50 et 100 . 10⁻¹⁰) pour fournir une surface inerte biologiquement au corps de lentille.

7. Lentille optique suivant la revendication 1, dans laquelle le groupe chimique est un groupe perfluoroalkyle et la surface extérieure a une épaisseur comprise entre 2.000 et 6.000 Â (2.000 et 6.000 . 10⁻¹⁰ m), pour fournir une surface biologiquement inerte, dotée d'un faible éclat et d'une résistance à la salissure au corps de lentille.

8. Lentille optique suivant la revendication 1, dans laquelle le groupe chimique est un polypeptide cytotoxique.

9. Lentille optique suivant la revendication 8, dans laquelle le polypeptide est une pénicilline-N ou une polymyxine-B.

10. Procédé pour modifier la surface extérieure d'un corps de lentille optique de polymère acrylique pour qu'elle présente des caractéristiques de surface sélectionnées et désirées, comprenant :
(1) l'activation de la surface extérieure du corps de lentille par une réaction d'hydrolyse activant la surface pour générer une forte concentration de groupes carboxy sur des chaînes polymères du polymère acrylique à la surface extérieure du corps de lentille, et
(2) la modification de la surface extérieure activée du corps de lentille par réaction d'un réactif comprenant un groupe chimique sélectionné parmi un groupe perfluoroalkyle, un groupe alkyle (CH₂)ₓCH₃ dans lequel x est 2 à 12, un groupe siloxy, un groupe cyclohexyle, un absorbeur d'UV ou un polypeptide cytotoxique, avec les groupes carboxy de façon à lier le groupe chimique à la surface du corps de lentille et à modifier la structure moléculaire de celle-ci, le groupe chimique étant lié à la surface du corps de lentille par un ester silylique.

11. Procédé suivant la revendication 10, dans lequel dans l'étape (1), les groupes carboxy sont liés aux chaînes polymères par réaction du polymère acrylique à la surface extérieure du corps de lentille avec une solution aqueuse concentrée d'un hydroxyde de tétraméthylammonium, puis lavage et chauffage du corps de lentille pour éliminer l'ammoniac.

12. Procédé suivant la revendication 11, dans lequel dans l'étape (2), le réactif comprend de plus des groupes silanes réactifs pour la liaison du groupe chimique aux groupes carboxy.

13. Procédé suivant la revendication 12, dans lequel dans l'étape (2), le groupe chimique est un groupe perfluoroalkyle, un groupe alkyle, un groupe siloxane ou un groupe cyclohexyle.

14. Procédé suivant la revendication 13, dans lequel dans l'étape (2), le groupe chimique est le groupe perfluoroalkyle et dans lequel le réactif est un réactif perfluoroalkyle mélangé au réactif silane et à du méthanol, le corps de lentille est immergé dans le réactif, lavé et séché pour produire une couche de fluoroalkyle dont l'épaisseur est contrôlée par la concentration du réactif silane de façon à être comprise entre 50 et 100 Â (50 et 100 . 10⁻¹⁰ m), pour fournir une surface inerte biologiquement au corps de lentille ou de façon à être comprise entre 2.000 et 6.000 Â (2.000 et 6.000 . 10⁻¹⁰ m), pour fournir une surface inerte biologiquement, dotée d'un faible éclat et d'une résistance à la salissure au corps de lentille.

15. Procédé suivant la revendication 14, dans lequel le réactif silane est un réactif trialcoxy aminosilane.

16. Procédé suivant la revendication 12, dans lequel dans l'étape (2), le groupe chimique un polypeptide cytotoxique et le réactif est un mélange d'un réactif silane et de méthanol, le réactif est hydraté avec de l'eau et le corps de lentille est immergé dans le réactif.

17. Procédé suivant la revendication 16, dans lequel le polypeptide est une pénicilline-N ou une polymyxine-B.

18. Procédé suivant la revendication 17, dans lequel le réactif silane est un trialcoxysilane ou un chlorosilane.

19. Procédé suivant la revendication 10, dans lequel l'étape (2) comprend l'immersion du corps de lentille dans un mélange aqueux d'un réactif trialcoxy acryloxysilane et de méthanol et la polymérisation d'un dérivé acrylique d'un absorbeur d'UV avec des groupes acryloxysilanes liés à la surface du corps de lentille.

20. Procédé pour modifier la surface extérieure d'un corps de lentille optique de polymère acrylique pour qu'elle présente une caractéristique de surface sélectionnée et désirée, comprenant :
la réaction d'un réactif comprenant un groupe chimique sélectionné parmi un groupe perfluoroalkyle, un groupe alkyle (CH₂)ₓCH₃ dans lequel x est 2 à 12, un groupe siloxy, un groupe cyclohexyle, un absorbeur d'UV ou un polypeptide cytotoxique, avec les groupes carboxy sur des chaînes polymères à une surface extérieure du polymère acrylique pour lier le groupe chimique à la surface du corps de lentille et modifier la structure moléculaire de celle-ci, le réactif comprenant de plus un groupe silane réactif pour la liaison du groupe chimique à la surface du corps de lentille par un ester silylique.

21. Procédé suivant la revendication 20, dans lequel le groupe chimique est un groupe perfluoroalkyle, un groupe alkyle, un groupe siloxane ou un groupe cyclohexyle.

22. Procédé suivant la revendication 21, dans lequel le groupe chimique est le groupe perfluoroalkyle et dans lequel le réactif est un réactif perfluoroalkyle mélangé à un réactif silane et à du méthanol, et dans lequel le procédé comprend de plus le contrôle de la concentration du réactif silane pour contrôler l'épaisseur de la surface modifiée à une valeur comprise entre 50 et 100 Â (50 et 100 . 10⁻¹⁰ m), pour fournir une surface inerte biologiquement au corps de lentille ou à une valeur comprise entre 2.000 et 6.000 Â (2.000 et 6.000 . 10⁻¹⁰ m), pour fournir une surface inerte biologiquement, dotée d'un faible éclat et d'une résistance à la salissure au corps de lentille.

23. Procédé suivant la revendication 20, dans lequel le groupe chimique un polypeptide cytotoxique et le réactif est un mélange d'un réactif silane et de méthanol.

24. Procédé pour modifier la surface extérieure d'un corps de lentille optique de polymère acrylique pour qu'elle présente des caractéristiques d'absorption de la lumière ultra-violette sélectionnées et désirées, comprenant :
l'immersion du corps de lentille dans un mélange aqueux de réactif trialcoxy acryloxy silane et de méthanol et la polymérisation d'un dérivé acryloxy d'un absorbeur d'UV avec des groupes acryloxysilanes liés à la surface du corps de lentille.

25. Procédé pour activer la surface d'un corps de lentille optique de polymère acrylique comprenant la réaction de la surface de polymère acrylique du corps de lentille avec une solution aqueuse concentrée d'un hydroxyde de tétraméthylammonium, le lavage et ensuite le chauffage du corps de lentille pour éliminer l'ammoniac, laissant des groupes carboxy actifs liés à une chaîne polymère à la surface extérieure du polymère acrylique.
